# EUROPEAN PATENT SPECIFICATION

(11) **EP 3 514 869 B1**
(45) Date of publication and mention of the grant of the patent: **04.10.2023**
(21) Application number: 18849275.5
(22) Date of filing: 06.08.2018
(51) Int. Cl.: H01M 4/62, C08G 73/10, C08L 79/08, H01G 11/38, H01G 11/86, H01M 4/13, H01M 4/139, H01M 4/04, H01M 4/134, H01M 4/1395

(54) **BINDER RESIN FOR ELECTRODES, ELECTRODE MIXTURE PASTE, ELECTRODE AND METHOD FOR PRODUCING ELECTRODE**
BINDEMITTELHARZ FÜR ELEKTRODEN, ELEKTRODENMISCHPASTE, ELEKTRODE UND VERFAHREN ZUR HERSTELLUNG DER ELEKTRODE
RÉSINE LIANTE POUR ÉLECTRODES, PÂTE DE MÉLANGE D'ÉLECTRODE, ÉLECTRODE ET PROCÉDÉ DE PRODUCTION D'ÉLECTRODE

(30) Priority: 23.08.2017 JP 2017160428
(43) Date of publication of application: 24.07.2019
(73) Proprietor: UBE Corporation, Ube-shi, Yamaguchi 755-8633 (JP)
(72) Inventor: NAKAYAMA Takeshige, Ube-shi Yamaguchi 755-8633 (JP); NARITA Kazutaka, Ube-shi Yamaguchi 755-8633 (JP); INOUE Shohei, Ube-shi Yamaguchi 755-8633 (JP)
(74) Representative: Plasseraud IP
(86) International application number: PCT/JP2018/029406
(87) International publication number: WO 2019/039254

(56) References cited:
- WO-A1-00/68318
- WO-A1-2010/027020
- WO-A1-2012/133143
- WO-A1-2015/020016
- WO-A1-2017/138604
- JP-A- S6 176 459
- JP-A- H10 188 992
- JP-A- 2010 276 167
- JP-A- 2013 528 573
- JP-A- 2014 526 582
- US-A- 4 276 407
- US-A1- 2013 288 120
- US-A1- 2016 233 513
- Thomas: "GPC/SEC Practical Tips and Tricks", , 1 October 2011 (2011-10-01), XP055608344, Retrieved from the Internet: URL:https://www.agilent.com/cs/library/sli depresentation/Public/GCC2011-Wksp_GPC_Tip s-and-Tricks_Presentation.pdf [retrieved on 2019-07-24]

## Description

### Technical Field

The present invention relates to an electrode mixture paste comprising a binder resin for electrodes for electrochemical devices such as a lithium ion secondary battery and an electric double layer capacitor.

### Background Art

A lithium ion secondary battery has a high energy density and a high capacity, and therefore has been widely used as a driving power source of a mobile information terminal, and the like. In recent years, the use thereof in industrial applications, including mounting to electric/hybrid vehicles which require a large capacity, has been also spreading, and studies have been conducted for further higher capacity and higher performance. One of the attempts is to increase the charge/discharge capacity by using silicon or tin, or an alloy containing them, which have a large amount of intercalated lithium per unit volume, as a negative electrode active material, for example.

When an active material having a large charge/discharge capacity such as silicon or tin, or an alloy containing them is used, however, a very great change in the volume of the active material occurs with charging and discharging, and therefore when polyvinylidene fluoride or a rubber-based resin, which have been widely used in a conventional electrode comprising carbon as the active material, is used as the binder resin, there is a problem that the current-collecting structure in the electrode is destroyed, and therefore the electron-conductivity of the electrode is decreased and the cycle characteristic of the battery is readily lowered, because the active material layer is easily destroyed and the delamination easily occurs at the interface between the current collector and the active material layer.

Accordingly, the development of a binder resin having high toughness in a battery environment, wherein the breakage or the delamination of the electrode hardly occurs even when a very great change in the volume of the active material occurs, has been desired.

As described in Patent Literature 1, it is known that a polyimide resin is used as a binder for an electrode of a lithium ion secondary battery.

Patent Literature 2 proposes the use of a polyimide having specified mechanical properties as a binder resin for an active material containing silicon or a silicon alloy. It is shown that the breakage of the active material layer, and the delamination of the current collector and the active material layer may be suppressed thereby even when a great change in the volume of the active material occurs with charging and discharging. However, the mechanical properties, the glass transition temperature, the coefficient of thermal expansion, and the thermal-decomposition initiation temperature of the polyimide are disclosed therein, but the concrete chemical structure thereof is not disclosed therein.

Patent Literature 3 proposes a polyimide having 3,3',4,4'-biphenyl tetracarboxylic acid residue, and the like, as a binder resin having high toughness.

Patent Literature 4 discloses that the first binder which binds a solid electrolyte and is inactive to the solid electrolyte, and the second binder which has better binding properties to a negative electrode current collector than the first binder are used as a binder for a negative electrode of a solid battery comprising a solid electrolyte layer, and highly elastic resins including a wholly-aromatic polyimide are listed as the second binder.

### Citation List

### Patent Literature

Patent Literature 1: JP-A-H06-163031
Patent Literature 2: WO2004/004031
Patent Literature 3: WO2011/040308
Patent Literature 4: JP-A-2014-116154

### Summary of Invention

### Technical Problem

While polyimides have excellent properties as a binder resin, there is a problem that the handling thereof is difficult because their solvent solubility is not high. Accordingly, a method is often adopted, wherein an electrode mixture paste is prepared using a solution of a polyamic acid, which is a polyimide precursor, and is applied on a current collector to form an electrode mixture layer, and then the polyamic acid is imidized by heat treatment to be converted into a polyimide. Two examples of such method are given in documents WO2017/138604A1 and US2016/233513A1. However, there is a fear that the electrode active material and the solid electrolyte comprised in the electrode mixture layer, and the like may be adversely affected because high-temperature heating is required for the imidization reaction and water is produced by the reaction. In addition, a method is sometimes adopted, wherein an electrode mixture paste is prepared using a soluble polyimide, which is dissolved in a solvent, and is applied on a current collector, and then the solvent is removed therefrom by heat treatment to form an electrode mixture layer. An example of such a method is described in Document US2013/288120A1. However, the solvent in which the polyimide is soluble is generally a polar solvent such as N-methyl-2-pyrrolidone (NMP), and the use thereof is not preferable.

An object of the present invention is to provide an electrode mixture paste comprising a binder resin for electrodes consisting of a polyimide-based resin, wherein an electrode having excellent adhesion of an electrode mixture layer to a current collector can be formed therefrom by heat treatment at a relatively low temperature without having to use a polar solvent, and it is not necessary to perform the imidization reaction involving the formation of water in the production of the electrode.

### Solution to Problem

The inventors of the present application have conducted various studies, and found, as the result, that by the use of a polyimide-based resin having a melting point lower than a specific temperature as a binder resin, an electrode having excellent adhesion of an electrode mixture layer to a current collector can be formed by heat treatment at a relatively low temperature without having to use a polar solvent, to arrive at the present invention.

Accordingly, the present invention relates to the following items.

The present invention relates to an electrode mixture paste, comprising a binder resin for electrodes consisting of a polyimide-based resin having a melting point of 300°C or lower, an electrode active material, and a non-polar solvent, wherein the melting point is determined by differential scanning calorimetry (DSC) under the condition that the temperature is increased from 25°C to 500°C at a rate of 20°C / min.

Preferably, the polyimide-based resin comprises a polyimide o btained from a tetracarboxylic acid component and a diamine co mponent, wherein at least one of the tetracarboxylic acid comp onent or the diamine component comprises an aliphatic compoun d in an amount of 50 mol% or more.

Preferably, the polyimide is a polyimide consisting of one or more structural units represented by the following chemical f ormula (1): 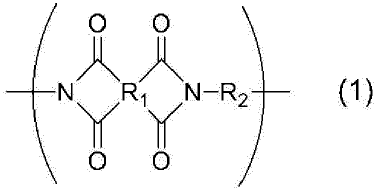 wherein R₁ is a tetravalent group having one or two aromatic r ings; and R₂ is a divalent alkylene group having 1 to 20 carbo n atoms.

Preferably, the R₁ in the chemical formula (1) is one or more groups selected from the group consisting of tetravalent grou ps of the following chemical formulas (2) to (5):

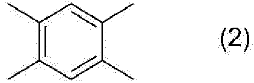

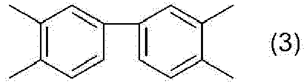

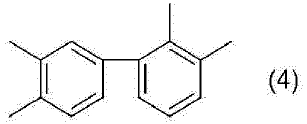

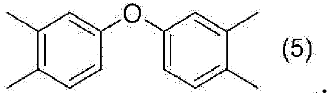

Preferably, the addition-reactive group is a phenylethynyl gr oup, or a group containing an acetylene bond.

Preferably, the electrode mixture paste further comprises a s olid electrolyte.

A binder resin for electrodes consisting of a polyimide-based resin having a melting point of 300°C or lower is disclosed.

Such binder resin for electrodes as described in "1" above is disclosed, wherein the polyimide-based resin comprises a polyimide obtained from a tetracarboxylic acid component and a diamine component, wherein at least one of the tetracarboxylic acid component or the diamine component comprises an aliphatic compound in an amount of 50 mol% or more.

Such binder resin for electrodes as described in "2" above is disclosed, wherein the polyimide is a polyimide consisting of one or more structural units represented by the following chemical formula (1): 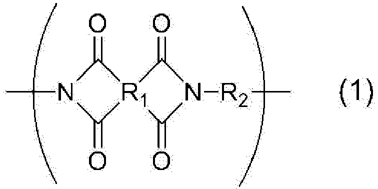 wherein R₁ is a tetravalent group having one or two aromatic rings; and R₂ is a divalent alkylene group having 1 to 20 carbon atoms.

Such binder resin for electrodes as described in "3" above is disclosed, wherein the R₁ in the chemical formula (1) is one or more groups selected from the group consisting of tetravalent groups of the following chemical formulas (2) to (5) :

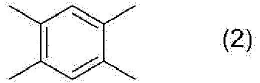

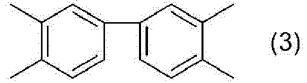

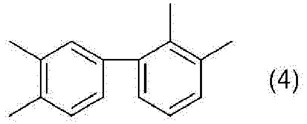

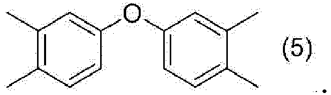

Such binder resin for electrodes as described in "1" above is disclosed, wherein the polyimide-based resin comprises an addition-reactive imide oligomer having an addition-reactive group at at least one of the ends of an imide oligomer having an average degree of polymerization of 50 or less. Such binder resin for electrodes as described in "5" above is disclosed, wherein the addition-reactive group is a phenylethynyl group, or a group containing an acetylene bond.

Such binder resin for electrodes as described in "6" above is disclosed, wherein the addition-reactive imide oligomer is an addition-reactive imide oligomer represented by the following chemical formula (6): 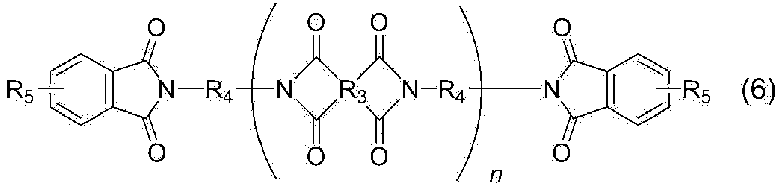 wherein R₃ is one or more groups selected from the group consisting of tetravalent groups having one or two aromatic rings; R₄ is one or more groups selected from the group consisting of divalent hydrocarbon groups having 1 to 20 carbon atoms; R₅ is a monovalent group containing an acetylene bond; and n is an integer of 1 to 15, wherein the R₃ and the R₄ contained in each structural unit may be the same as, or different from each other.

Such binder resin composition for electrodes, comprising the binder resin for electrodes as described in any one of "1" to "7" above is disclosed.

An electrode mixture paste, comprising the binder resin for electrodes as described in any one of "1" to "7" above, an electrode active material, and a solvent is disclosed.

Such electrode mixture paste as described in "9" above, wherein the solvent is a non-polar solvent is disclosed. Such electrode mixture paste as described in "9" or "10" above, further comprising a solid electrolyte is disclosed.

A method for producing an electrode, is disclosed comprising steps of:
applying the electrode mixture paste as described in any one of "9" to "11" above on a surface of a current collector consisting of a metal foil; and
heating the applied electrode mixture paste at a temperature equal to or higher than the melting point of the polyimide-based resin comprised in the electrode mixture paste but equal to or lower than 350°C.

An electrode is disclosed, comprising an electrode mixture layer comprising the binder resin for electrodes as described in any one of "1" to "7" above and an electrode active material.

Such electrode as described in "13" above, wherein the electrode mixture layer is formed on a surface of a current collector consisting of a metal foil is disclosed.

Such electrode as described in "13" or "14" above, wherein the electrode mixture layer further comprises a solid electrolyte is disclosed.

### Advantageous Effects of Invention

According to the present invention, there may be provided an electrode mixture paste comprising a binder resin for electrodes consisting of a polyimide-based resin, from which an electrode having excellent adhesion of an electrode mixture layer to a current collector can be formed by heat treatment at a relatively low temperature without having to use a polar solvent. As for the binder resin for electrodes, it is not necessary to perform the imidization reaction in the production of the electrode, and therefore the electrode active material and the solid electrolyte comprised in the electrode mixture layer, and the like can be prevented from being adversely affected by water produced by the imidization reaction. In addition, when the binder resin is used for forming the electrode mixture layer in a state where the binder resin is not dissolved, but dispersed in the solvent, sufficient binding force and adhesion of the electrode mixture layer to the current collector can be achieved. Meanwhile, an electrode can be formed by heat treatment at a relatively low temperature, and it is not necessary to use a polar solvent in the production of the electrode and it is also not necessary to perform the imidization reaction in which water is produced, and therefore adverse effects on the electrode active material and the solid electrolyte comprised in the electrode mixture layer, and the like can be suppressed. Consequently, an electrode having good properties may be obtained.

An electrode obtained using the binder resin for electrodes may be suitably used as an electrode of a lithium ion secondary battery, particularly as an electrode for a lithium ion secondary battery having a large charge/discharge capacity.

### Description of Embodiments

The polyimide-based resin used for the binder resin for electrodes is characterized in that the imidization reaction is substantially completed therein, and the melting point is 300°C or lower. The melting point of the polyimide-based resin is more preferably 250°C or lower, further preferably 200°C or lower. The term "the imidization reaction is substantially completed" herein means that if heat treatment is carried out in the production of the electrode, the imidization reaction does not proceed to form water to the extent that the electrode active material and the solid electrolyte comprised in the electrode mixture layer, and the like may be adversely affected. The polyimide-based resin used for the binder resin for electrodes may comprise a repeating unit of the amic acid structure before undergoing the imidization reaction, as long as the effect of the present invention may be achieved.

The binder resin for electrodes may consist of one type of polyimide-based resin having a melting point of 300°C or lower, preferably 250°C or lower, or may be a mixture of two or more types of polyimide-based resins having a melting point of 300°C or lower, preferably 250°C or lower. It is usually preferred, however, that the binder resin for electrodes exhibits a single melting point.

The "polyimide-based resin" in the present invention means a polymer and an oligomer which each comprise one or more repeating units derived from a tetracarboxylic acid component and a diamine component and having two cyclic imide groups, that is, repeating units represented by the chemical formula as described below. The "tetracarboxylic acid component" includes tetracarboxylic acid derivatives 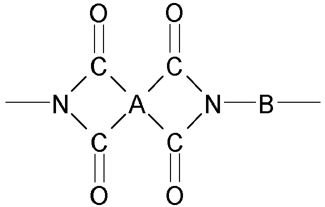 such as tetracarboxylic dianhydride, in addition to tetracarboxylic acid.
wherein A is a tetravalent group of a tetracarboxylic acid component, from which carboxyl groups have been removed; and B is a divalent group of a diamine component, from which amino groups have been removed.

Examples of the polyimide-based resin include a polyimide formed of a tetracarboxylic acid component and a diamine component, wherein at least one of them, more preferably either the tetracarboxylic acid component or the diamine component comprises an aliphatic compound in an amount of 50 mol% or more, more preferably 80 mol% or more. When an aliphatic compound is used, a polyimide having a melting point of 300°C or lower may be more easily obtained. In one embodiment, a polyimide obtained from an aromatic tetracarboxylic acid component and an aliphatic diamine component, or a polyimide obtained from an aliphatic tetracarboxylic acid component and an aromatic diamine component may be particularly preferred.

Examples of the tetracarboxylic acid component include aromatic tetracarboxylic dianhydride such as 3,3',4,4'-biphenyl tetracarboxylic dianhydride, 2,3,3',4'-biphenyl tetracarboxylic dianhydride, 2,2',3,3'-biphenyl tetracarboxylic dianhydride, pyromellitic dianhydride, benzophenone tetracarboxylic dianhydride, 4,4'-oxydiphthalic dianhydride, diphenylsulfone tetracarboxylic dianhydride, p-terphenyl tetracarboxylic dianhydride, and m-terphenyl tetracarboxylic dianhydride; and aliphatic tetracarboxylic dianhydride such as butane-1,2,3,4-tetracarboxylic dianhydride.

Examples of the diamine component include aliphatic diamine such as 1,2-propane diamine, 1,3-diamino propane, 2-methyl-1,3-propane diamine, 1,4-diamino butane, 1,3-diamino pentane, 1,5-diamino pentane, 2-methyl-1,5-diamino pentane, 1,6-diamino hexane (hexamethylene diamine), 1,7-diamino heptane, 1,8-diamino octane, 1,9-diamino nonane, 1,10-diamino decane (decamethylene diamine), 1,11-diamino undecane, and 1,12-diamino dodecane.

Examples of the diamine component also include aromatic diamine such as p-phenylene diamine, m-phenylene diamine, 2,4-diamino toluene, m-xylylene diamine, p-xylylene diamine, 4,4'-diamino diphenyl ether, 3,4'-diamino diphenyl ether, 4,4'-diamino diphenyl methane, 3,3'-diamino diphenyl methane, 3,4'-diamino diphenyl methane, 4,4'-diamino diphenyl sulfide, 4,4'-diamino diphenyl sulfone, 3,3'-diamino diphenyl sulfone, 1,5-diamino naphthalene, bis(4-amino-3-carboxy phenyl)methane, 1,3-bis(4-amino phenoxy) benzene, 1,4-bis(4-amino phenoxy)benzene, 2,2-bis[4-(4-amino phenoxy)phenyl]propane, bis[4-(4-amino phenoxy)phenyl] sulfone, and 4,4'-bis(4-amino phenoxy)biphenyl.

As described above, the polyimide in which at least one of the tetracarboxylic acid component or the diamine component comprises an aliphatic compound in an amount of 50 mol% or more is preferably a polyimide obtained from an aromatic tetracarboxylic acid component and an aliphatic diamine component, and in view of the performance as a binder resin for electrodes, the polyimide is particularly preferably a polyimide consisting of one or more structural units represented by the following chemical formula (1): 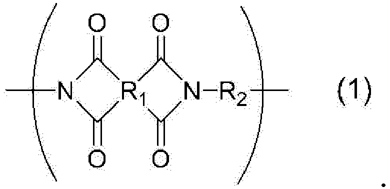 In the chemical formula (1), R₁ is a tetravalent group having one or two aromatic rings; and R₂ is a divalent alkylene group having 1 to 20 carbon atoms.

In the chemical formula (1), R₁ is preferably a tetravalent group having one or two benzene rings as the aromatic ring, and is more preferably any one of the tetravalent groups of the following chemical formulas (2) to (5) :

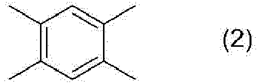

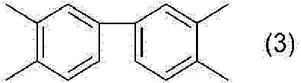

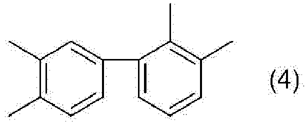

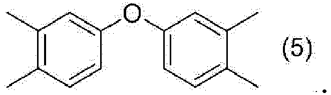

In the chemical formula (1), R₂ is preferably an alkylene group having 3 to 16 carbon atoms, and is more preferably an alkylene group having 3 to 14 carbon atoms. R₂ may be a linear alkylene group, or may be a branched alkylene group.

The polyimide may be produced by reacting a diamine component and a tetracarboxylic acid component in a solvent. The reaction method is preferably a method in which the tetracarboxylic acid component is added at a time or in multiple steps to a solution obtained by dissolving the diamine component in a solvent, and then the resulting mixture solution is heated to perform the polymerization (imidization reaction). The reaction temperature is usually preferably 120°C to 220°C, more preferably 150°C to 200°C, particularly preferably 160°C to 190°C. When the reaction temperature is lower than 120°C, the imidization reaction proceeds more slowly, and therefore the range is not preferable. When the reaction temperature is higher than 220°C, it may be higher than the boiling point of the solvent, and therefore the range is not preferable. The reaction time is usually preferably 0.5 hours to 72 hours, more preferably 1 hour to 60 hours, particularly preferably 1.5 hours to 48 hours. When the reaction time is shorter than 0.5 hours, the imidization reaction may not be completed. On the other hand, in view of the productivity, it is not preferable to spend 72 hours or longer on the reaction.

The molar ratio of the tetracarboxylic acid component to the diamine component [the tetracarboxylic acid component / the diamine component] is preferably adjusted to be substantially equimolar, more specifically, 0.95 to 1.05, preferably 0.97 to 1.03. When the molar ratio is outside this range, the toughness of the obtained polyimide may be lower.

The polyimide may be precipitated in the form of powder, for example, by mixing the solution obtained by the reaction, which comprises the polyimide, with a poor solvent such as water, alcohol, and hexane. The polyimide may be obtained by separating the powder from the solvent by a means such as filtration, and then drying the powder.

Any known organic solvent may be used as the solvent used in the production of the polyimide. Examples thereof include N,N-dimethylformamide, N,N-dimethylacetamide, N,N-diethylacetamide, N-methyl-2-pyrrolidone, N-ethyl-2-pyrrolidone, 1,3-dimethyl-2-imidazolidinone, N-methylcaprolactam, hexamethylphosphorotriamide, 1,2-dimethoxyethane, bis(2-methoxyethyl)ether, 1,2-bis(2-methoxyethoxy)ethane, tetrahydrofuran, bis[2-(2-methoxyethoxy)ethyl]ether, 1,4-dioxane, dimethylsulfoxide, dimethylsulfone, diphenylether, sulfolane, diphenylsulfone, tetramethylurea, anisole, m-cresol, phenol, and γ-butyrolactone. These solvents may be used alone, or two or more types of the solvents may be mixed and used.

Examples of the polyimide-based resin used for the electrode mixture paste comprising the binder resin for electrodes of the present invention also include an addition-reactive imide oligomer having an addition-reactive group at at least one of the ends of an imide oligomer formed of a tetracarboxylic acid component and a diamine component, which has an average degree of polymerization of 50 or less, preferably 40 or less, more preferably 30 or less. When the average degree of polymerization is 50 or less, an addition-reactive imide oligomer having a melting point of 300°C or lower may be more easily obtained. The state where the degree of polymerization of the imide oligomer is 50 means a state where 25 molecules of the tetracarboxylic acid component and 25 molecules of the diamine component have been reacted.

As the tetracarboxylic acid component and the diamine component constituting the addition-reactive imide oligomer, the same components as exemplified above as the tetracarboxylic acid component and the diamine component constituting the polyimide may be suitably used. In this case, a combination of an aromatic tetracarboxylic acid component and an aromatic diamine component (a wholly-aromatic imide oligomer) is also preferred.

The addition-reactive group at the end of the addition-reactive imide oligomer is not particularly limited, as long as it is a group which undergoes the addition polymerization reaction (curing reaction) by heat, but in view of the performance as a binder resin for electrodes, the group is preferably a reactive group selected from the group consisting of a group containing an acetylene bond such as a phenylethynyl group, a nadic acid group, and a maleimide group, and is more preferably a group containing an acetylene bond such as a phenylethynyl group, further preferably a phenylethynyl group.

The addition-reactive group is introduced into the end of the imide oligomer by reacting a compound having an acid anhydride group or an amino group, together with an addition-reactive group, in the molecule with an amino group or an acid anhydride group at the end of the imide oligomer. This reaction is preferably a reaction to form an imide ring. Examples of the compound having an acid anhydride group or an amino group, together with an addition-reactive group, in the molecule include 4-(2-phenylethynyl) phthalic anhydride, phenylethynyl trimellitic anhydride, 4-(2-phenylethynyl) aniline, 4-ethynyl-phthalic anhydride, 4-ethynyl aniline, nadic anhydride, and maleic anhydride.

The addition-reactive imide oligomer is preferably an addition-reactive imide oligomer represented by the following chemical formula (6): 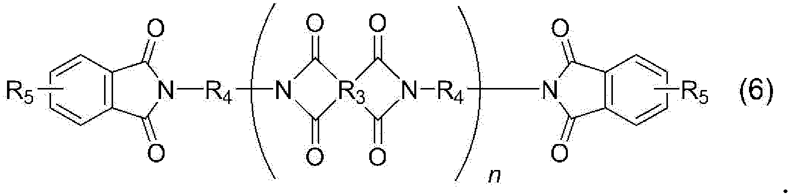 In the chemical formula (6), R₃ is one or more groups selected from the group consisting of tetravalent groups having one or two aromatic rings; R₄ is one or more groups selected from the group consisting of divalent hydrocarbon groups having 1 to 20 carbon atoms; R₅ is a monovalent group containing an acetylene bond, preferably a monovalent group having a phenylethynyl group; and n is an integer of 1 to 15, with the proviso that the R₃ and the R₄ contained in each structural unit may be the same as, or different from each other.

In the chemical formula (6), R₃ is preferably a tetravalent group having one or two benzene rings as the aromatic ring, and is more preferably any one of the tetravalent groups of the chemical formulas (2) to (5) as described above. R₄ is preferably a divalent group having 1 to 3 benzene rings, or an alkylene group having 1 to 20 carbon atoms.

The addition-reactive imide oligomer may be easily produced by reacting a tetracarboxylic dianhydride as a tetracarboxylic acid component, a diamine component, and a compound having an acid anhydride group or an amino group, together with an addition-reactive group, in the molecule preferably in a solvent, using these compounds such that the total amount of the acid anhydride group and the total amount of the amino group are substantially equal, more specifically, the ratio of the total amount of the acid anhydride group to the total amount of the amino group contained in the used compounds [the total amount of the acid anhydride group / the total amount of the amino group] is 0.95 to 1.05, preferably 0.97 to 1.03. The reaction method is preferably the same as the method for producing the polyimide as described above, and the same solvents may also be used.

The electrode mixture paste of the present invention comprises the binder resin for electrodes, an electrode active material, and a solvent. The solvent is preferably a non-polar solvent. The electrode mixture paste may be prepared by mixing the binder resin for electrodes or the binder resin composition for electrodes, an electrode active material, and a solvent.

In order to achieve a high capacity, it is desired that the amount of the electrode active material in the electrode be larger, and therefore it is desired that a sufficient binding force be achieved with a smaller amount of the binder resin. When a binder resin in a state of being dissolved in a solvent is used in the production of an electrode, the uneven distribution of the binder resin may not occur and a high binding force may be easily achieved even though the amount of the binder resin is smaller, as compared with the binder resin in a state of powder. Accordingly, in the case of a polyimide-based binder resin, an electrode mixture paste has been conventionally prepared using a solution of a polyamic acid, which is a polyimide precursor, or a solution of a soluble polyimide. However, the uses of a solution of a polyamic acid and a solution of a soluble polyimide have the problems as described above. In general, a polyimide does not have a melting point, or has a very high melting point of 400°C or higher, further 500°C or higher. In the present invention, the use of a special polyimide-based resin having a melting point of 300°C or lower, preferably 250°C or lower, as a binder resin for electrodes has made it possible to achieve a sufficient binding force and a sufficient adhesion of the electrode mixture layer to the current collector even when a polar solvent is not used, that is, even when the binder resin is used for forming the electrode mixture layer in a state where the binder resin is not dissolved, but dispersed in the solvent. In addition, an electrode can be formed by heat treatment at a relatively low temperature, and it is not necessary to use a polar solvent in the production of the electrode and it is also not necessary to perform the imidization reaction in which water is produced, and therefore adverse effects on the electrode active material and the solid electrolyte comprised in the electrode mixture layer, and the like can be suppressed. Consequently, an electrode having good properties may be obtained.

Although any known electrode active material may be suitably used, a lithium-containing metal composite oxide, a carbon powder, a silicon powder, a tin powder, or a powder of an alloy containing silicon or tin is preferred. The amount of the electrode active material in the electrode mixture paste is usually, but not limited to, 0.1 to 1000 times, preferably 1 to 1000 times, more preferably 5 to 1000 times, further preferably 10 to 1000 times, as much as the binder resin for electrodes on a mass basis. When the amount of the active material is too large, the active material may not be sufficiently bonded to the current collector and may be readily detached therefrom. On the other hand, when the amount of the active material is too small, inactive portions may increase in the active material layer (also referred to as "electrode mixture layer") formed on the current collector, and the function as an electrode may be insufficient.

The solvent used for the electrode mixture paste may be a solvent in which the binder resin for electrodes of the present invention is not soluble. The solvent used for the electrode mixture paste is preferably a non-polar solvent. Examples of the solvent for the electrode mixture paste include non-polar solvents, including aromatic hydrocarbons such as xylene, toluene, and ethylbenzene; and aliphatic hydrocarbons such as pentane, hexane, and heptane.

The electrode mixture paste may comprise another binder resin other than the polyimide-based resin in addition to the binder resin for electrodes of the present invention. The content of the binder resin other than the polyimide-based resin is preferably less than 50 mass%, more preferably less than 30 mass%, relative to the total amount of the binder component.

Examples of the binder resin include polyvinylidene fluoride, polytetrafluoroethylene, styrene-butadiene rubber, butadiene rubber, nitrile rubber, polyacrylonitrile, ethylene-vinyl alcohol copolymer resin, ethylene-propylene-diene rubber, polyurethane, polyacrylic acid, polyamide, polyacrylate, polyvinyl ether, fluorine rubber, carboxy methyl cellulose, and sodium carboxymethylcellulose.

The electrode mixture paste may also comprise a solid electrolyte. Examples of the solid electrolyte include oxide-based solid electrolytes such as perovskite-type crystal La_{0.51}Li_{0.34}TiO_{2.94}, garnet-type crystal Li₇La₃Zr₂O₁₂, NASICON-type crystal Li_{1.3}Al_{0.3}Ti_{1.7}(PO₄)₃, and amorphous LIPON (Li_{2.9}PO_{3.3}N_{0.46}); and sulfide-based solid electrolytes such as Li₂S-SiS₂ type, and Li₂S-P₂S₅ type.

An additive such as a surfactant, a viscosity modifier, and a conductive auxiliary agent may be further added to the electrode mixture paste as necessary.

The electrode comprises an electrode mixture layer comprising the binder resin for electrodes as described above and an electrode active material. The electrode mixture layer is formed, for example, on a surface of a current collector consisting of a metal foil. The electrode mixture layer of the electrode may further comprise another binder resin other than the polyimide-based resin and/or a solid electrolyte as described above. In addition, when the binder resin for electrodes has a reactive functional group such as an addition-reactive imide oligomer having an addition-reactive group at at least one of the ends as described above, the electrode mixture layer may comprise a product formed by reacting the reactive functional groups intramolecularly or intermolecularly.

The electrode may be produced by flow-casting or applying the electrode mixture paste of the present invention as described above on a conductive current collector consisting of a metal foil such as aluminum, copper, nickel, iron, titanium, and cobalt, or an alloy foil consisting of a combination thereof; and then heating the electrode mixture paste to remove the solvent therefrom. The heat treatment is preferably carried out under the condition that the polyimide-based resin comprised in the electrode mixture paste may be melted, and thereby the components that form the electrode mixture layer, including the electrode active material, may be integrated and also the current collector and the electrode mixture layer may be bonded together. More specifically, the heat treatment is preferably carried out at a temperature equal to or higher than the melting point of the used polyimide-based resin but equal to or lower than 350°C, preferably under pressure. In order to suppress the decomposition of the components comprised in the electrode and the battery, including the solid electrolyte, and thereby obtain an electrode and an electrochemical device such as a lithium ion secondary battery which have good properties, the temperature of the heat treatment is usually preferably 350°C or lower.

### EXAMPLES

The present invention will be more specifically described below with reference to Examples and Comparative Examples. However, the present invention is not limited to these Examples.

The methods for measuring the properties, which were used in the Examples as described below, will be set forth below.

### <Melting point measurement method (DSC method)>

The melting point was determined under the condition that the temperature was increased from room temperature (25°C) to 500°C at a rate of 20°C/min, using a differential scanning calorimeter DSC-50 (Shimadzu Corporation).

### <Adhesion test (Cross-cut test)>

The adhesion test was conducted in accordance with JIS K 5600-5-6. The evaluation was made by visual observation and expressed by Class 0 to Class 5 in accordance with the criterion for evaluation (3) (The smaller the numerical value is, the stronger the adhesion is.).

The abbreviations of the compounds used in the Examples as described below will be explained.
ODPA: 4,4'-oxydiphthalic dianhydride,
s-BPDA: 3,3',4,4'-biphenyl tetracarboxylic dianhydride,
a-BPDA: 2,3',3,4'-biphenyl tetracarboxylic dianhydride,
PMDA: pyromellitic dianhydride,
PEPA: 4-phenylethynyl phthalic anhydride,
PETA: phenylethynyl trimellitic anhydride,
PPD: p-phenylene diamine,
MPD: m-phenylene diamine,
ODA: 4,4'-diamino diphenyl ether,
TPE-R: 1,3-bis(4-aminophenoxy)benzene,
DMD: decamethylene diamine,
HMD: hexamethylene diamine,
NMP: N-methyl-2-pyrrolidone,
PVdF: polyvinylidene fluoride,
SBR: styrene-butadiene rubber.

### [Example 1]

s-BPDA was used as the acid anhydride and DMD was used as the diamine (s-BPDA:DMD = 1:1 (molar ratio)), and they were polymerized in NMP at 180°C for 12 hours, to obtain a polyimide solution in which the imidization was completed. The solution was dispersed in water, and then the precipitated polyimide was separated by filtration. Water washing and separation by filtration were repeated three times, and then the collected polyimide was dried at 150°C for 24 hours, to obtain a binder resin for electrodes. The melting point of this resin was 190°C.

7 g of silicon powder and 90 g of hexane were added to 3 g of the obtained binder resin for electrodes, and then the mixture was kneaded, to prepare an electrode mixture paste. The paste was applied on a copper foil, and heated at 120°C for 60 minutes in a hot air drying machine under a nitrogen atmosphere at a normal pressure, and then hot-pressed at 250°C, to produce an electrode. The adhesion test was conducted on the electrode, and as the result thereof, the adhesion was Class 0.

### [Example 2]

1 g of carboxy methyl cellulose, 7 g of silicon powder and 90 g of water were added to 3 g of the binder resin for electrodes obtained in Example 1, and then the mixture was kneaded, to prepare an electrode mixture paste. An electrode was produced in the same way as in Example 1 except that this paste was used. The adhesion test was conducted on the electrode, and as the result thereof, the adhesion was Class 0.

### [Example 3]

A binder resin for electrodes was obtained in the same way as in Example 1 except that the acid anhydride was changed to ODPA. The melting point of this resin was 150°C. An electrode was produced in the same way as in Example 1 except that this binder resin for electrodes was used. The adhesion test was conducted on the electrode, and as the result thereof, the adhesion was Class 0.

### [Example 4]

A binder resin for electrodes was obtained in the same way as in Example 1 except that a-BPDA and PEPA were used as the acid anhydride and TPE-R and MPD were used as the diamine (a-BPDA:PEPA:TPE-R:MPD = 1:2:1:1 (molar ratio)). The melting point of this resin was 175°C. An electrode was produced in the same way as in Example 1 except that this binder resin for electrodes was used. The adhesion test was conducted on the electrode, and as the result thereof, the adhesion was Class 0.

### [Example 5]

A binder resin for electrodes was obtained in the same way as in Example 1 except that ODPA and PETA were used as the acid anhydride and HMD was used as the diamine (ODPA:PETA:HMD = 1:2:2 (molar ratio)). The melting point of this resin was 170°C. An electrode was produced in the same way as in Example 1 except that this binder resin for electrodes was used. The adhesion test was conducted on the electrode, and as the result thereof, the adhesion was Class 0.

### [Example 6]

A binder resin for electrodes was obtained in the same way as in Example 1 except that ODPA, s-BPDA and PETA were used as the acid anhydride and ODA and PPD were used as the diamine (ODPA:s-BPDA:PETA:ODA:PPD = 5:5:20:14:6 (molar ratio)). The melting point of this resin was 250°C. An electrode was produced in the same way as in Example 1 except that this binder resin for electrodes was used. The adhesion test was conducted on the electrode, and as the result thereof, the adhesion was Class 0.

### [Comparative Example 1]

s-BPDA as the acid anhydride and PPD as the diamine were polymerized in NMP at 180°C for 12 hours, to obtain a polyimide-dispersed NMP solution in which the imidization was completed. The precipitated polyimide was separated by filtration, and then water washing and separation by filtration were repeated three times, and the collected polyimide was dried at 150°C for 24 hours, to obtain a polyimide powder. The melting point of this resin was measured, but no melting point was observed.

7 g of silicon powder and 90 g of hexane were added to 3 g of the obtained polyimide powder, and then the mixture was kneaded, to prepare an electrode mixture paste. The paste was applied on a copper foil, and heated at 120°C for 60 minutes in a hot air drying machine under a nitrogen atmosphere at a normal pressure, and then hot-pressed at 350°C, but an electrode could not be produced because the electrode mixture layer and the copper foil were not bonded together.

### [Comparative Example 2]

PMDA as the acid anhydride and ODA as the diamine were polymerized in NMP at 180°C for 12 hours, to obtain a polyimide-dispersed NMP solution in which the imidization was completed. The precipitated polyimide was separated by filtration, and then water washing and separation by filtration were repeated three times, and the collected polyimide was dried at 150°C for 24 hours, to obtain a polyimide powder. The melting point of this resin was measured, but no melting point was observed.

7 g of silicon powder and 90 g of hexane were added to 3 g of the obtained polyimide powder, and then the mixture was kneaded, to prepare an electrode mixture paste. The paste was applied on a copper foil, and heated at 120°C for 60 minutes in a hot air drying machine under a nitrogen gas atmosphere at a normal pressure, and then hot-pressed at 350°C, but an electrode could not be produced because the electrode mixture layer and the copper foil were not bonded together.

### [Comparative Example 3]

7 g of silicon powder and 90 g of hexane were added to 3 g of PVdF, and then the mixture was kneaded, to prepare an electrode mixture paste. The paste was applied on a copper foil, and heated at 120°C for 60 minutes in a hot air drying machine under a nitrogen gas atmosphere at a normal pressure, and then hot-pressed at 250°C, to produce an electrode. The adhesion test was conducted on the electrode, and as the result thereof, the adhesion was Class 5 and the adhesion properties were very bad.

### [Comparative Example 4]

7 g of silicon powder and 90 g of hexane were added to 3 g of SBR, and then the mixture was kneaded, to prepare an electrode mixture paste. A copper foil on which the paste was applied was heated at 120°C for 60 minutes in a hot air drying machine under a nitrogen gas atmosphere at a normal pressure, and then hot-pressed at 250°C, to produce an electrode. The adhesion test was conducted on the electrode, and as the result thereof, the adhesion was Class 4 and the adhesion properties were bad.

## Claims

1. An electrode mixture paste, comprising a binder resin for electrodes consisting of a polyimide-based resin having a melting point of 300°C or lower, an electrode active material, and a non-polar solvent, wherein the melting point is determined by differential scanning calorimetry (DSC) under the condition that the temperature is increased from 25°C to 500°C at a rate of 20°C / min.

2. The electrode mixture paste according to claim 1, wherein the polyimide-based resin comprises a polyimide obtained from a tetracarboxylic acid component and a diamine component, wherein at least one of the tetracarboxylic acid component or the diamine component comprises an aliphatic compound in an amount of 50 mol% or more.

3. The electrode mixture paste according to claim 2, wherein the polyimide is a polyimide consisting of one or more structural units represented by the following chemical formula (1): 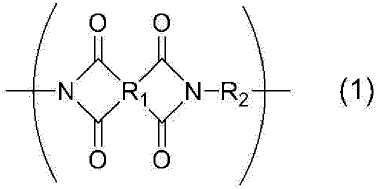 wherein R₁ is a tetravalent group having one or two aromatic rings; and R₂ is a divalent alkylene group having 1 to 20

4. The electrode mixture paste according to claim 3, wherein the R₁ in the chemical formula (1) is one or more groups selected from the group consisting of tetravalent groups of the following chemical formulas (2) to (5):

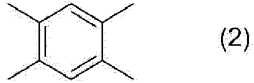

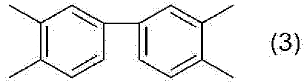

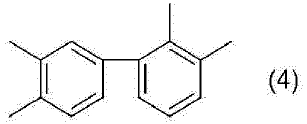

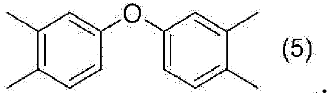

5. The electrode mixture paste according to claim 4, wherein the addition-reactive group is a phenylethynyl group, or a group containing an acetylene bond.

6. The electrode mixture paste according to any one of claims 1 to 5, further comprising a solid electrolyte.

## Patentansprüche

1. Elektrodenmischpaste, umfassend ein Bindemittelharz für Elektroden, das aus einem Harz auf Polyimidbasis mit einem Schmelzpunkt von 300°C oder weniger besteht, ein Elektrodenaktivmaterial und ein unpolares Lösungsmittel,
wobei der Schmelzpunkt durch Differential-Scanning-Kalorimetrie (DSC) unter der Bedingung bestimmt wird, dass die Temperatur von 25°C auf 500°C mit einer Rate von 20°C/min erhöht wird.

2. Elektrodenmischpaste nach Anspruch 1, wobei das Harz auf Polyimidbasis ein Polyimid umfasst, das aus einer Tetracarbonsäure-Komponente und einer Diamin-Komponente erhalten wird, wobei mindestens eine der Tetracarbonsäure-Komponente oder der Diamin-Komponente eine aliphatische Verbindung in einer Menge von 50 Mol-% oder mehr umfasst.

3. Elektrodenmischpaste nach Anspruch 2, wobei das Polyimid ein Polyimid ist, das aus einer oder mehreren Struktureinheiten besteht, die durch die folgende chemische Formel (1) dargestellt werden: 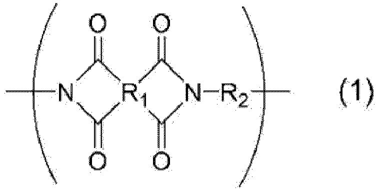 worin R₁ eine tetravalente Gruppe mit einem oder zwei aromatischen Ringen ist; und R₂ eine divalente Alkylengruppe mit 1 bis 20 Kohlenstoffatomen ist.

4. Elektrodenmischpaste nach Anspruch 3, wobei R₁ in der chemischen Formel (1) eine oder mehrere Gruppen ist, die aus der Gruppe ausgewählt sind, die aus tetravalenten Gruppen der folgenden chemischen Formeln (2) bis (5) besteht:

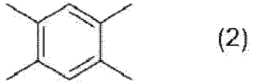

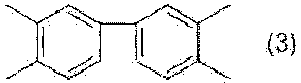

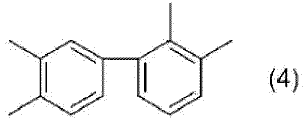

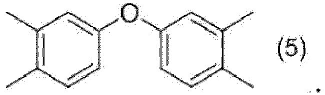

5. Elektrodenmischpaste nach Anspruch 4, wobei die additionsreaktive Gruppe eine Phenylethinyl-Gruppe ist oder eine Gruppe, die eine Acetylenbindung enthält.

6. Elektrodenmischpaste nach einem der Ansprüche 1 bis 5, die ferner einen festen Elektrolyten umfasst.

## Revendications

1. Pâte de mélange pour électrodes, comprenant une résine liante pour des électrodes consistant en une résine à base de polyimide ayant un point de fusion de 300 °C ou moins, un matériau actif d'électrodes et un solvant non polaire, dans laquelle le point de fusion est déterminé par une analyse calorimétrique différentielle (DSC) dans des conditions où la température augmente de 25 °C à 500 °C à un rythme de 20 °C/min.

2. Pâte de mélange pour électrodes selon la revendication 1, dans laquelle la résine à base de polyimide comprend un polyimide obtenu à partir d'un constituant d'acide trétracarboxylique et d'un constituant de diamine, dans laquelle au moins un parmi le constituant d'acide trétracarboxylique ou le constituant de diamine comprend un composé aliphatique en une quantité de 50 % en moles ou plus.

3. Pâte de mélange pour électrodes selon la revendication 2, dans laquelle le polyimide est un polyimide consistant en un ou plusieurs motifs structuraux représentés par la formule chimique (1) suivante : 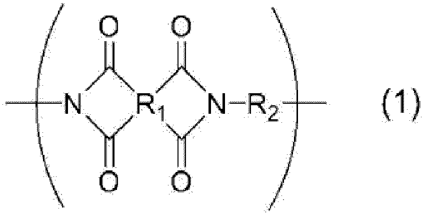 dans laquelle Ri est un groupe tétravalent ayant un ou deux noyaux aromatiques ; et R₂ est un groupe alkylène divalent ayant 1 à 20 atomes de carbone.

4. Pâte de mélange pour électrodes selon la revendication 3, dans laquelle le R₁ dans la formule chimique (1) est un ou plusieurs groupes sélectionnés parmi le groupe consistant en des groupes trétravalents des formules chimiques (2) à (5) suivantes :

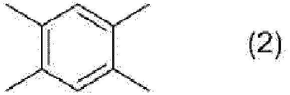

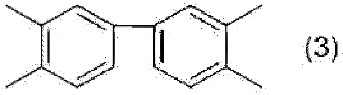

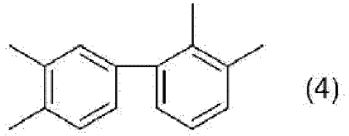

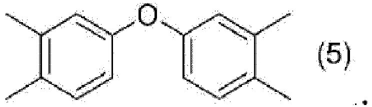

5. Pâte de mélange pour électrodes selon la revendication 4, dans laquelle le groupe réactif par addition est un groupe phényléthynyl ou un groupe contenant une liaison acétylénique.

6. Pâte de mélange pour électrodes selon l'une quelconque des revendications 1 à 5, comprenant en outre un électrolyte solide.
